# EUROPÄISCHE PATENTANMELDUNG

(11) **EP 0 945 690 A2**
(43) Veröffentlichungstag der Anmeldung: **29.09.1999**
(21) Anmeldenummer: 99104984.2
(22) Anmeldetag: 12.03.1999
(51) Int. Cl.: F25B 9/02, G01J 5/06

(54) **Verfahren und Vorrichtung zum Kühlen von Bauteilen, insbesondere von Infrarot-Detektoren bei Suchköpfen**

(30) Priorität: 24.03.1998 DE 19812725
(71) Anmelder: Bodenseewerk Gerätetechnik GmbH, 88662 Überlingen (DE)
(72) Erfinder: Hingst, Uwe Dr., 88094 Oberteuringen (DE)
(74) Vertreter: Weisse, Jürgen, Dipl.-Phys.

(57) **Zusammenfassung**

Zum Kühlen von Bauteilen, insbesondere von Infrarot-Detektoren (34) bei Suchköpfen, mittels eines Joule-Thomson-Kühlers unter Verwendung von zwei verschiedenen Kühlgasen, von denen eines eine relativ hohe Kühlleistung aber auch einen relativ hochen Siedepunkt und das andere eine relativ geringe Kühlleistung aber dafür einen relativ niedrigen Siedepunkt besitzt, wird durch eine für beide Gase gemeinsame Entspannungsöffnung (42) des Joule-Thomson-Kühlers (16;60) zunächst nur das Kühlgas hoher Kühlleistung zur schnellen Abkühlung des Bauteils (34) auf eine durch dieses Kühlgas erreichbare tiefe Temperatur und nach Erreichen einer solchen Temperatur das Kühlgas mit niedrigem Siedepunkt geleitet.

## Beschreibung

### Technisches Gebiet

Die Erfindung betrifft ein Verfahren und eine Vorrichtung zum Kühlen von Bauteilen, insbesondere von Infrarot-Detektoren bei Suchköpfen, mittels eines Joule-Thomson-Kühlers unter Verwendung von zwei verschiedenen Kühlgasen, von denen eines eine relativ hohe Kühlleistung aber auch einen relativ hohen Siedepunkt und das andere eine relativ geringe Kühlleistung aber dafür einen relativ niedrigen Siedepunkt besitzt.

### Stand der Technik

Durch die DE-A-39 41 314 ist eine Kühlvorrichtung zum Kühlen eines Detektors bei einem Suchkopf bekannt mit einem ersten Kühler zum Kühlen des Detektors, wobei der erste Kühler einen Entspannungsauslaß aufweist, durch welchen unter seinen Inversionspunkt vorgekühltes Argon unter Abkühlung entspannt wird, und einen zweiten Kühler, durch den eine Vorkühlung des Argons erzielbar ist. Der zweite Kühler ist ein Joule-Thomson-Kühler mit einem Entspannungsauslaß, über welchen das unter Druck stehende Methan unter Abkühlung entspannt wird, und mit einem dem Entspannungsauslaß vorgeschalteten Gegenstrom-Wärmetauscher, durch welches das unter Druck zugeführte Methan von dem abgekühlten, entspannten Methan vorgekühlt wird. Der erste Kühler ist dagegen ein Expansionskühler mit einem Entspannungsauslaß und einem dem Entspannungsauslaß, in welchem das unter Druck stehende Argon nur in Wärmeaustausch mit dem entspannten und abgekühlten Methan ist. Das aus dem Entspannungsauslaß des ersten Kühlers austretende, entspannte und auf seinen Siedepunkt abgekühlte Argon wird gegen den zu kühlenden Detektor geleitet. Das Methan hat dabei eine hohe Kühlleistung, besitzt aber einen hohen Siedepunkt von 118K.

Das Argon besitzt eine demgegenüber wesentlich geringere Kühlleistung, hat aber einen niedrigen Siedepunkt. Das Argon dient dabei nicht zur Vorkühlung. Statt Methan wird in der DE-A-39 41 314 auch Tetrafluorkohlenstoff (CF₄) vorgeschlagen. Auf diese Weise soll die Kühlung des Detektors bei im wesentlichen gleichem Gesamtgasverbrauch verbessert werden. Methan und Argon werden dabei stets gleichzeitig zur Kühlung herangezogen.

Eine ähnliche Kühlvorrichtung zeigt die DE-C-41 35 764.

Die DE-A-42 26 820 zeigt einen Joule-Thomson-Kühler für einen Detektor, bei welchem für eine begrenzte Zeit der Durchfluß des Kühlgases erhöht wird, um eine schnelle Abkühlung zu erreichen.

### Offenbarung der Erfindung

Der Erfindung liegt die Aufgabe zugrunde, mit einer möglichst geringen Menge an Kühlgas zunächst ein möglichst schnelles Herunterkühlen des Bauteils und dann eine Abkühlung auf eine möglichst niedrige Temperatur zu ermöglichen.

Erfindungsgemäß wird diese Aufgabe bei einem Verfahren der eingangs genannten Art dadurch gelöst, daß durch eine für beide Gase gemeinsame Entspannungsöffnung des Joule-Thomson-Kühlers zunächst nur das Kühlgas hoher Kühlleistung zur schnellen Abkühlung des Bauteils auf eine durch dieses Kühlgas erreichbare tiefe Temperatur und nach Erreichen einer solchen Temperatur das Kühlgas mit niedrigem Siedepunkt geleitet wird.

Durch das Kühlgas mit hoher Kühlleistung wie Methan oder Tetrafluorkohlenstoff kann eine schnelle Abkühlung erreicht werden. Diese Kühlgase besitzen einen relativ hohen spezifischen Joule-Thomson-Koeffizienten αₕ. Diese Kühlgase haben aber, wie gesagt, relativ hohe Siedetemperaturen. Nach der durch das Methan oder ein ähnliches Kühlgas erreichten schnellen Abkühlung erfolgt die weitere Abkühlung und Kühlung mit einem Kühlgas, das zwar eine geringere Kühlleistung zeigt aber einen niedrigeren Siedepunkt besitzt wie Argon mit einem Siedepunkt von 87 K. Diese beiden Kühlgase werden gegeneinander zeitverzögert auf einen Joule-Thomson-Kühler mit einer für beide Gase gemeinsamen Entspannungsöffnung geleitet.

Eine Vorrichtung zur Durchführung dieses Verfahrens ist dadurch gekennzeichnet, daß
(a) ein Joule-Thomson Kühler mit einer für beide Gase gemeinsamen Entspannungsöffnung vorgesehen ist,
(b) der erste Behälter für das Kühlgas hoher Kühlleistung und der zweite Behälter für das Kühlgas mit niedrigem Siedepunkt beide mit einer Zuleitung zu dem Joule-Thomson-Kühler verbindbar sind und
(c) Durchfluß-Freigabemittel vorgesehen sind durch welche die Verbindung der Zuleitung mit dem zweiten Behälter, der das Kühlgas mit niedrigem Siedepunkt enthält, mit Verzögerung gegenüber der Verbindung der Zuleitung mit dem ersten Behälter, der das Kühlgas mit hoher Kühlleistung enthält, herstellbar ist.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.

### Kurze Beschreibung der Zeichnungen

- Fig.1: ist eine schematische Darstellung einer ersten Ausführung einer Kühlvorrichtung zum Kühlen von Bauteilen.
- Fig.2: zeigt eine Abwandlung der Kühlvorrichtung von Fig.1.
- Fig.3: zeigt eine zweite Ausführung einer Kühlvorrichtung zum Kühlen von Bauteilen.

### Bevorzugte Ausführungen der Erfindung

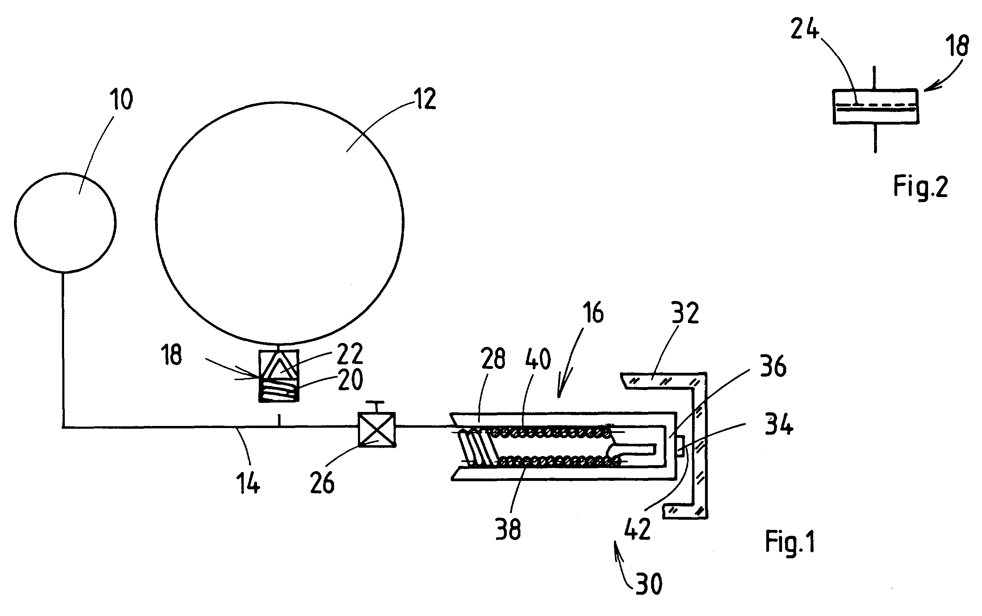

In Fig.1 ist mit 10 ein erster Behälter in Form eines Tanks bezeichnet. Der erste Behälter 10 ist mit einem Kühlgas mit relativ hoher Kühlleistung und relativ hohem Siedepunkt unter Druck gefüllt. Das Kühlgas im ersten Behälter 10 ist vorzugsweise Methan (CH₄) mit einem Siedepunkt von 113 K oder Tetrafluorkohlenstoff (CF₄). Mit 12 ist ein zweiter Behälter in Form eines gesonderten Tanks bezeichnet. Der zweite Behälter 12 ist mit einem Kühlgas gefüllt, das verglichen mit dem Kühlgas im ersten Behälter 10 eine relativ geringe Kühlleistung liefert, dafür aber einen niedrigen Siedepunkt besitzt. Dieses Kühlgas ist vorzugsweise Argon mit einer Siedetemperatur von 87 K.

Die beiden Behälter 10 und 12 sind mit einer Zuleitung 14 zu einem Joule-Thomson-Kühler 16 verbindbar. Dabei ist der erste Behälter 10 direkt mit der Zuleitung 14 verbunden. Der zweite Behälter 12 ist mit der Zuleitung 14 über ein Öffnungsglied 18 verbunden, welches auf Überdruck des Kühlgases in dem zweiten Behälter 12 gegenüber dem Kühlgas in dem ersten Behälter 10 anspricht und unter solchem Überdruck öffnet. Bei der Ausführung von Fig.1 ist dieses Öffnungsglied 18 ein Rückschlagventil mit einem von einer Feder 20 belasteten Ventilschließkegel 22. Statt des Rückschlagventils kann aber als Öffnungsglied 18 auch eine Berstmembran oder Berstplatte 24 vorgesehen sein, wie in Fig.2 dargestellt ist. In der Zuleitung 14 zum Joule-Thomson-Kühler 16 sitzt weiterhin ein Absperrventil 26.

Der Joule-Thomson-Kühler 16 sitzt in dem zylindrischen, inneren Mantelteil 28 eines Dewar-Gefäßes 30. Der ebenfalls zylindrische, äußere Mantelteil 32 des Dewar-Gefäßes 30 bildet ein für infrarote Strahlung durchlässiges Fenster. Ein auf infrarote Strahlung ansprechender Detektor 34 sitzt auf der dem Fenster zugewandten Stirnfläche 36 des inneren Mantelteils 28. Der Joule-Thomson-Kühler weist einen Wärmetauscher 38 auf. Der Wärmetauscher ist ein sich wendelförmig längs der Innenwandung des inneren Mantelteils 28 verlaufendes Rohr, das mit Rippen 40 versehen ist. Das Rohr läuft in einer Entspannungsöffung 42 aus. Die Entspannungsöffnung 42 kann eine Entspannungsdüse sein. Das entspannte und dadurch abgekühlte Kühlgas fließt im Gegenstrom über den Wärmetauscher 38 und kühlt das unter Druck zuströmende Kühlgas vor. Das ist die übliche Wirkungsweise eines Joule-Thomson-Kühlers. Die Entspannungsöffnung 42 liegt auf der Innenseite der Stirnfläche 36 des inneren Mantelteils 28 gegenüber, so daß der auf der Außenseite dieser Stirnfläche 36 sitzende Detektor 34 gekühlt wird.

Das Volumen des ersten Behälters 10 ist kleiner als das Volumen des zweiten Behälters 12. Der Druck des Kühlgases (Methan) in dem ersten Behälter 10 ist jedoch höher als der Druck des Kühlgases (Argon) in dem zweiten Behälter. Daher bleibt zunächst das Rückschlagventil 18 geschlossen bzw. die nach oben hin in Fig.2 abgestützte Berstmembran oder Berstplatte 24 intakt. Nach Öffnen des Absperrventils 26 strömt nur Methan aus dem Behälter 10 zum Joule-Thomson-Kühler 16 und wird in der einzigen Entspannungsöffnung 42 entspannt. Durch die höhere Kühlleistung des Methans erfolgt dabei eine schnelle Abkühlung des Detektors 34. Der Detektor kann in dieser Phase jedoch allenfalls auf den relativ hohen Siedepunkt des Methans (oder anderen Kühlgases hoher Kühlleistung) abgekühlt werden. Wenn der Druck des Methans im ersten Behälter 10 den Druck des Argons (oder anderen Kühlgases mit niedrigem Siedepunkt) im zweiten Behälter 12 unterschreitet, öffnet das Öffnungsglied 18 und gibt einen Strom von Argon zu der Zuleitung 14 und dem Joule-Thomson-Kühler 16 frei. Der Joule-Thomson-Kühler 16 erhält dann ein Gasgemisch von Methan und Argon.

Drücke und Volumina der Kühlgase in den Behältern 10 und 12 sind so ausgelegt, daß mittels des Methans gerade das Herunterkühlen des Detektors 34 erfolgt. Dann wird mit einem Gasgemisch gearbeitet, das aber überwiegend Argon enthält, weil das Volumen des ersten Behälters 10 wesentlich kleiner ist als das Volumen des Behälters 12. Die Kühltemperatur liegt bei diesem Gasgemisch etwas höher als bei reinem Argon und beträgt etwa 96 K. Die Kühlleistung ist dafür etwas höher. Die Temperatur des ungeregelten Joule-Thomson-Kühlers 16 wird zwischen Siede- und Taulinie des Gemisches ziemlich stabil sein. Die Volumina der Behälter 10 und 12 ergeben sich aus dem erforderlichen Gasvolumen für die Herunterkühl-Phase (Gasvolumen aus dem ersten Behälter 10 bis zum Erreichen des Druckes in dem zweiten Behälter 12) und der Restmenge für die kontinuierliche Freiflug-Phase (Gasvolumina aus beiden Flaschen unterhalb des Druckes, bei welchem die Druckgleichheit erreicht wurde). Die Auslegung der Behälter 10 und 12 mit den unterschiedlichen Volumina und Drücken ist eine lösbare Optimierungsaufgabe.

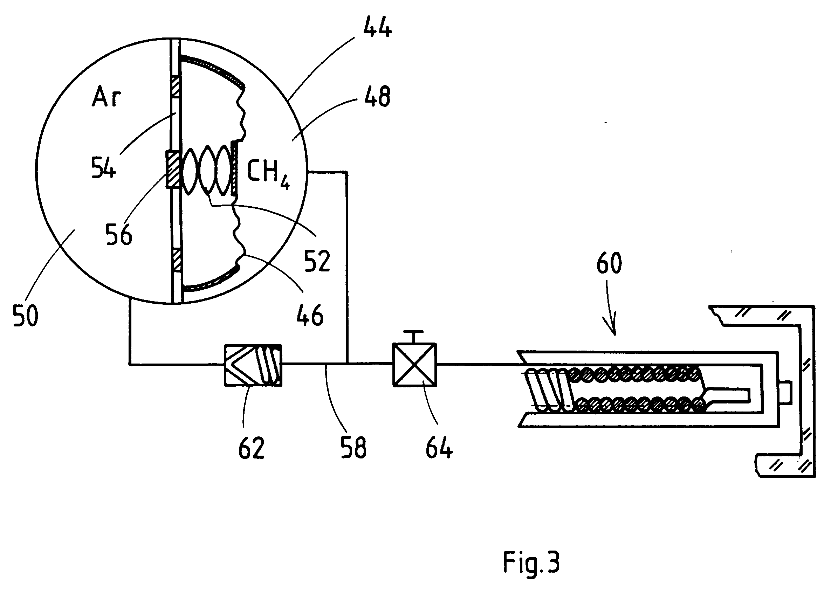

Die Vorrichtung von Fig.1 hat den Vorteil eines relativ einfachen Aufbaus. Der Nachteil dieser Vorrichtung ist jedoch, daß auch nach der Herunterkühl-Phase, wenn der Detektor 34 kontinuierlich über einen längeren Zeitraum hinweg auf einer möglichst konstanten, niedrigen Temperatur gehalten werden soll, noch ein Gasgemisch durch den Joule-Thomson-Kühler fließt. Dadurch bleibt die Kühltemperatur oberhalb der, die mit reinem Argon erreichbar ist. Fig.3 zeigt eine Vorrichtung, bei welcher das Methan zunächst vollständig für die Herunterkühl-Phase aufgebraucht. Anschließend während der kontinuierlichen Kühlphase wird der Joule-Thomson-Kühler mit reinem Argon betrieben. Ein ungeregelter Joule-Thomson-Kühler mit reinem Argon besitzt außerdem eine recht gute zeitliche Temperaturstabilität.

In Fig.3 ist mit 44 ein Tank bezeichnet. Der Tank 44 ist durch eine flexible Membran 46 in zwei Kammern und unterteilt. Die beiden Kammern bilden die 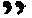 Behälter" 48 und 50 für die beiden Kühlgase. Der Behälter 48 entspricht dem ersten Behälter 10 von Fig.1 und ist mit Methan unter Druck gefüllt. Der Behälter 50 entspricht dem zweiten Behälter 12 von Fig.1 und ist mit Argon unter Druck gefüllt. Die Membran 48 ist in Richtung auf den Behälter 48 hin durch eine starke Feder 52 vorbelastet. Die Feder 52 stützt sich an einem mit Durchbrüchen 54 für das Gas versehenen, plattenförmigen Widerlager 56 ab. Die unterschiedlichen Drücke von Methan und Argon zusammen mit der Kraft der Feder 52 halten sich an der Membran 48 die Waage. Die Membran 46 stellt sich so ein, daß die darauf wirkenden Kräfte sich ausgleichen. Da die Membran 46 durch die Feder 52 in Richtung auf den Behälter 48, d.h nach rechts in der Figur, vorbelastet ist, ist im Gleichgewichtszustand der Druck des Methans größer als der des Argons, um eine entsprechende Gegenkraft zu erzeugen.

Wie bei der Ausführung nach Fig.1 ist auch in Fig.3 der Behälter 48 unmittelbar mit einer Zuleitung 58 zu einem Joule-Thomson-Kühler 60 verbunden. Der Behälter 50 ist mit der Zuleitung 58 über ein Öffnungsglied 62 in Form eines Rückschlagventils verbunden. Das Rückschlagventil öffnet in Richtung auf die Zuleitung 58 hin und ist geschlossen, solange der Druck in der Zuleitung 58 und in dem Behälter 48 größer ist als der Druck in dem Behälter 50.

In der Zuleitung 58 ist stromab von der beschriebnen Anordnung ein Absperrventil 64 angeordnet.

Der Joule-Thomson-Kühler 60 ist in gleicher Weise aufgebaut wie der Joule-Thomson-Kühler 16 von Fig.1.

Die beschriebene Vorrichtung arbeitet wie folgt:

Im Ausgangszustand nach Öffnen des Absperrventils 64 steht das Methan im Behälter 48 unter einem höheren Druck als das Argon im Behälter 50. Die Druckdifferenz ist durch die Feder 52 bestimmt. Das Öffnungsglied 62 in Form des Rückschlagventils ist geschlossen. Zum Joule-Thomson-Kühler 60 strömt nur Methan. Dieser Zustand bleibt erhalten, solange noch Methan in dem Behälter 48 ist. So lange bleibt das Methan auf einem hohen Druck. Das abströmende Volumen des Methans wird durch die Bewegung der Membran ausgeglichen. Wenn das Methan verbraucht ist, bricht der Druck des Methans in dem Behälter 48 zusammen. Dann erst drückt der Druck des Argons das Öffnungsglied 62 auf. Dann strömt nur noch reines Argon zu dem Joule-Thomson-Kühler 60.

Bei dieser Vorrichtung wird in der Freiflug-Phase die tiefere Siedetemperatur des Argons erreicht, also 87 K.

Bei beiden Ausführungen wird durch eine für beide Gase gemeinsame Entspannungsöffnung 42 des Joule-Thomson-Kühlers 16 bzw. 60 zunächst nur das Kühlgas hoher Kühlleistung (Methan oder Tetrafluorkohlenstoff) zur schnellen Abkühlung des Bauteils 34 auf eine durch dieses Kühlgas erreichbare tiefe Temperatur und nach Erreichen einer solchen Temperatur das Kühlgas (Argon) mit niedrigem Siedepunkt geleitet.

## Patentansprüche

1. Verfahren zum Kühlen von Bauteilen, insbesondere von Infrarot-Detektoren (34) bei Suchköpfen, mittels eines Joule-Thomson-Kühlers unter Verwendung von zwei verschiedenen Kühlgasen, von denen eines eine relativ hohe Kühlleistung aber auch einen relativ hohen Siedepunkt und das andere eine relativ geringe Kühlleistung aber dafür einen relativ niedrigen Siedepunkt besitzt, **dadurch gekennzeichnet, daß** durch eine für beide Gase gemeinsame Entspannungsöffnung (42) des Joule-Thomson-Kühlers (16;60) zunächst nur das Kühlgas hoher Kühlleistung zur schnellen Abkühlung des Bauteils (34) auf eine durch dieses Kühlgas erreichbare tiefe Temperatur und nach Erreichen einer solchen Temperatur das Kühlgas mit niedrigem Siedepunkt geleitet wird.

2. Verfahren nach Anspruch 1, **dadurch gekennzeichnet, daß** das Kühlgas hoher Kühlleistung Methan (CH₄) ist.

3. Verfahren nach Anspruch 1, **dadurch gekennzeichnet, daß** das Kühlgas hoher Kühlleistung Tetrafluorkohlenstoff (CF₄) ist.

4. Verfahren nach einem der Ansprüche 1 bis 3, **dadurch gekennzeichnet, daß** das Kühlgas mit niedrigem Siedepunkt Argon ist.

5. Verfahren nach einem der Ansprüche 1 bis 3, **dadurch gekennzeichnet, daß** das Kühlgas mit niedrigem Siedepunkt Stickstoff ist.

6. Verfahren nach einem der Ansprüche 1 bis 3, **dadurch gekennzeichnet, daß** das Kühlgas mit niedrigem Siedepunkt Luftist.

7. Vorrichtung zum Kühlen von elektronischen Bauteilen , insbesondere von Infrarot-Detektoren (34) bei Suchköpfen, mittels eines Joule-Thomson-Kühlers (16;60) unter Verwendung von zwei verschiedenen, in je einem Behälter (10,12;48,50) unter Druck enthaltenen Kühlgasen, von denen eines eine relativ hohe Kühlleistung aber auch einen relativ hohen Siedepunkt und das andere eine relativ geringe Kühlleistung aber dafür einen relativ niedrigen Siedepunkt besitzt, **dadurch gekennzeichnet, daß**
(a) ein Joule-Thomson Kühler (16;60) mit einer für beide Gase gemeinsamen Entspannungsöffnung (42) vorgesehen ist,
(b) der erste Behälter (10;48) für das Kühlgas hoher Kühlleistung und der zweite Behälter (12;50) für das Kühlgas mit niedrigem Siedepunkt beide mit einer Zuleitung (14;58) zu dem Joule-Thomson-Kühler (16;60) verbindbar sind und
(c) Durchfluß-Freigabemittel (18;62) vorgesehen sind durch welche die Verbindung der Zuleitung (14;58) mit dem zweiten Behälter (12), der das Kühlgas mit niedrigem Siedepunkt enthält, mit Verzögerung gegenüber der Verbindung der Zuleitung (14;58) mit dem ersten Behälter (10;48), der das Kühlgas mit hoher Kühlleistung enthält, herstellbar ist.

8. Vorrichtung nach Anspruch 7, **dadurch gekennzeichnet, daß** im Ausgangszustand das Kühlgas hoher Kühlleistung in dem ersten Behälter (10;48) unter einem höheren Druck steht als das Kühlgas mit niedrigem Siedepunkt in dem zweiten Behälter (12;50).

9. Vorrichtung nach Anspruch 8, **dadurch gekennzeichnet, daß** das Volumen des ersten Behälters (10) kleiner ist als das Volumen des zweiten Behälters (12).

10. Vorrichtung nach Anspruch 8 oder 9, **dadurch gekennzeichnet, daß** der erste Behälter (10;48) unmittelbar und der zweite Behälter (12;50) über ein auf Überdruck des zweiten Behälters (12;50) gegenüber dem ersten Behälter (10;48) ansprechendes Öffnungsglied (18;62) mit der Zuleitung (14;58) verbunden ist.

11. Vorrichtung nach Anspruch 10, **dadurch gekennzeichnet, daß** das Öffnungsglied (18;62) ein Rückschlagventil ist.

12. Vorrichtung nach Anspruch 10, **dadurch gekennzeichnet, daß** das Öffnungsglied (18) eine Berstmembran oder Berstplatte (24) ist.

13. Vorrichtung nach einem der Ansprüche 10 bis 12, **dadurch gekennzeichnet, daß** in der Zuleitung (14;58) stromab von den Verbindungen zu den beiden Behältern (10,12;48,50) ein Absperrventil (26;64) angeordnet ist.

14. Vorrichtung nach Anspruch 10, **dadurch gekennzeichnet, daß**
(a) der erste und der zweite Behälter (48,50) von je einer Kammer eines durch eine Membran (46) in zwei Kammern unterteilten Tanks (44) gebildet sind, wobei die Drücke der beiden Kühlgase an der Membran (46) gegeneinanderwirken und die Membran (46) sich in eine Gleichgewichtslage einstellt, und
(b) die Membran (46) durch eine Vorlast (52) in Richtung auf den ersten Behälter (48) vorbelastet ist, durch welche der Druck in dem ersten Behälter (48) höher als der Druck in dem zweiten Behälter (50) gehalten wird, solange noch Kühlgas in dem ersten Behälter (48) vorhanden ist.
